# EUROPÄISCHE PATENTSCHRIFT

(11) **EP 3 358 939 B1**
(45) Veröffentlichungstag und Bekanntmachung des Hinweises auf die Patenterteilung: **07.08.2019**
(21) Anmeldenummer: 16798382.4
(22) Anmeldetag: 20.09.2016
(51) Int. Cl.: A01G 9/12, F16B 7/22, A01G 17/06

(54) **Y-FÖRMIGER PFAHL FÜR DEN OBSTANBAU**
Y-SHAPED ROD FOR THE CULTIVATION OF FRUIT
POLE EN FORME Y POUR LA CULTURE DES FRUITS

(43) Veröffentlichungstag der Anmeldung: 15.08.2018
(73) Patentinhaber: Bacchus GmbH, 08606 Oelsnitz/Vogtl. (DE)
(72) Erfinder: MEISER, Wolfgang, 66119 Saarbrücken (DE)
(74) Vertreter: Patentanwaltskanzlei Vièl & Wieske PartGmbB
(86) Internationale Anmeldenummer: PCT/DE2016/100439
(87) Internationale Veröffentlichungsnummer: WO 2018/054403

(56) Entgegenhaltungen:
- EP-A1- 2 468 089
- AU-A- 5 858 973
- US-A- 3 469 343
- US-A- 6 138 407
- US-A1- 2003 101 642

## Beschreibung

Die Erfindung betrifft einen Y-förmigen Pfahl für den Obstanbau, insbesondere für den Anbau von Tafeltrauben.

Aus der EP 2 540 154 B1 ist ein Pfahl zum Halten von Drähten im Wein- und Obstbau bekannt, der einen Grundkörper mit einem ersten und zweiten Schenkel aus Metallblech aufweist, an dem wenigstens ein im rechten Winkel zur Längsachse verlaufender Querausleger mit einer Vielzahl von Haken zum Halten der Drähte angeordnet ist, wobei der Querausleger in eine Öffnung des Grundkörpers einschiebbar und mittels eines Schnellverschlusses in diesem formschlüssig verriegelbar ist.

Aus der CN 202697405 U ist eine Y-förmige Stütze für den Weinbau bekannt. Sie umfasst einen vertikalen Bereich und einen sich daran anschließenden V-förmigen Bereich und schützt die Reben besser vor Unwettern und bietet ihnen mehr Platz.

Die US 5, 557,883 A beschreibt eine Stütze für am Rebstock getrocknete Rosinen mit einer Gabelung des Stützarms.

Die US 2003/101642 A1 beschreibt einen Y-förmigen Pfahl für den Obstanbau, wobei ein länglicher Grundkörper vorgesehen ist, an dem im oberen Bereich eine Öffnung angeordnet ist, wobei in der Öffnung ein V-förmiger Arm durch Einfädeln zentriert befestigbar ist.

Die Aufgabe der Erfindung besteht darin, einen verbesserten Y-förmigen Pfahl für den Obstanbau zu schaffen, der leicht transportierbar und schnell montierbar ist.

Diese Aufgabe wird im Rahmen der Erfindung dadurch gelöst, dass ein länglicher Grundkörper und zwei Seitenarme vorgesehen sind, wobei der Grundkörper Öffnungen zum Einstecken jeweils mindestens eines Seitenarms aufweist, wobei die eingesteckten Seitenarme zum oberen Ende des Grundkörpers hin abgewinkelt sind, wobei zwischen den Öffnungen und dem oberen Ende des Grundkörpers eine im Wesentlichen horizontale Durchgangsöffnung vorgesehen ist, durch die eine Sicherungsstange durchgeschoben ist, wobei die Sicherungsstange über wenigstens ein Verriegelungsmittel horizontal gegen ein Verschieben in der Durchgangsbohrung festlegbar ist und die die Sicherungsstange mit dem mindestens einen Seitenarm lösbar verbindbar ist und wobei das wenigstens eine Verriegelungsmittel einen an der Sicherungsstange vorgesehenen und in der Verriegelungsstellung am Grundkörper anliegenden eigensteifen Anschlag sowie eine an der Sicherungsstange geformte federelastische Blechzunge umfasst.

In jede der Öffnungen des Grundkörpers kann je ein Seitenarm eingesteckt werden, womit aus dem Grundkörper und den beiden schräg nach oben abgewinkelten Seitenarmen ein Y-förmiger Pfahl gebildet wird.

Die Seitenarme werden gesichert, indem durch die Durchgangsöffnung eine Sicherungsstange geschoben und diese in der Durchgangsöffnung festgelegt wird und anschließend die Endbereiche der Sicherungsstange jeweils mit einem der Seitenarme verbunden werden. Es ist auch möglich, nur einen Seitenarm vorzusehen, wobei dieser dann mit einer kürzeren Sicherungsstange, welche sich nur von der Durchgangsöffnung bis zu dem Seitenarm erstreckt, gesichert wird.

Es ist vorgesehen, dass die Sicherheitsstange eine Vielzahl von Haken und/oder Ösen zum Halten der Drähte aufweist.

Ebenso ist vorgesehen, dass der Grundkörper eine Vielzahl von Haken und/oder Ösen zum Halten der Drähte aufweist.

Die Sicherungsstange kann einen I-, L-, U- oder V-förmigen Querschnitt (Profil) aufweisen.

Der Grundkörper kann einen L-, U- oder V-förmigen Querschnitt (Profil) aufweisen.

Es ist vorteilhaft für die Erfindung vorgesehen, dass das wenigstens eine Verriegelungsmittel einen an der Sicherungsstange vorgesehenen und in der Verriegelungsstellung am Grundkörper anliegenden eigensteifen Anschlag sowie eine an der Sicherungsstange geformte federelastische Blechzunge umfasst, welches zur Erzeugung einer formschlüssigen Verbindung mit einer Rastaufnahme am Grundkörper zusammenwirkt, um die Sicherungsstange in der Verriegelungsposition gegen eine Bewegung relativ zum Grundkörper zu sichern.

In diesem Zusammenhang ist vorgesehen, dass die Sicherungsstange aus einem Blechprofil besteht und dass die federelastische Blechzunge durch Ausstanzen und Formbiegen eines zungenförmigen Abschnitts aus dem Blechprofil der Sicherungsstange gebildet ist. Es ist vorteilhaft, dass die federelastische Blechzunge einen aus dem Blechprofil der Sicherungsstange in einem Winkel von ca. 70 bis 90°, vorzugsweise von ca. 80°, herausspringenden Federabschnitt und einen im Wesentlichen parallel zur Außenseite der Sicherungsstange verlaufenden Stützabschnitt umfasst, an dessen freiem Ende eine Stützfläche geformt ist, über die die Sicherungsstange in der Verriegelungsposition am Grundkörper abstützbar ist.

Die erfindungsgemäßen Verriegelungsmittel können in einer Ausgestaltung eine Bohrung in der Sicherungsstange sowie eine Bohrung in dem Grundkörper umfassen, wobei Befestigungsmittel durch die Bohrung in dem Grundkörper und durch die Bohrung in der Sicherungsstange schiebbar und sicherbar sind.

Als Befestigungsmittel sind alle ein- oder zweiteiligen Befestigungsmittel vorgesehen, die es erlauben die Sicherungsstange und den Grundkörper über die jeweiligen Bohrungen, die fluchtend zueinander angeordnet sind, zueinander form- und/oder kraftschlüssig zu sichern. Beispielsweise kann das Befestigungsmittel eine Schraube sein, die durch eine Mutter gesichert ist oder ein T-Element mit einer Bohrung im Hauptschenkel, durch den eine Öse oder eine Stange gesteckt werden kann. Ebenso ist vorstellbar, dass das Befestigungsmittel einen Grundkörper (Flachkopf) mit zwei Armen aufweist, wobei die Arme gegenüber dem Grundkörper verbiegbar sind (vergleichbar mit Musterbeutelklammem für den Versand von vorgelochten Luftpolsterversandtaschen / Briefumschlägen).

Vorteil ist im weiterhin vorgesehen, dass im Bereich der Öffnungen und/oder der Seitenarme Sicherungsmittel zum Sichern der in die Öffnungen eingesteckten Seitenarme vorgesehen sind.

Die Sicherungsmittel können als an den Seitenarmen angeordnete Vorsprünge ausgebildet sein, die in entsprechende Öffnungen des Grundkörpers eingreifen (vergleichbar mit Hängeregalen). Die Sicherungsmittel können ebenfalls als am Grundkörper angeordnete Vorsprünge ausgebildet sein, die in die entsprechenden Öffnungen der Seitenarme eingreifen. Beispielsweise können die Vorsprünge der Seitenarme in die Öffnungen eingebracht werden, wenn die Seitenarme im Wesentlichen parallel zum Grundkörper angeordnet sind und die Seitenarme in ihrer Position sichern, wenn diese den gewünschten Winkel zum Grundkörper erreicht haben.

Es ist im Rahmen der Erfindung vorgesehen, dass zur lösbaren Verbindung der Sicherungsstange mit den Seitenarmen jeweils eine Schraubverbindung zwischen der Sicherungsstange und einem der Seitenarme vorgesehen ist.

Es ist erfindungsgemäß vorgesehen, dass die eingesteckten Seitenarme in einem Winkel α von ca. 40 bis 60°, vorzugsweise von ca. 50°, zum oberen Ende des Grundkörpers hin abgewinkelt sind.

Es liegt im Rahmen der Erfindung, dass an dem oberen Ende des Grundkörpers wenigstens ein Kopplungsmittel für eine Netzhalterungskappe anordbar ist.

Eine vorteilhafte Ausgestaltung der Erfindung sieht vor, dass der Grundkörper ein in etwa ein L-, U- oder V-förmiges Profil aufweist, an dem im Bereich für die Aufnahme von Drahtrahmen außenliegende Haken angeordnet sind, wobei die Haken im Bereich der Drahtrahmen für den Obstanbau als nach oben (zum oberen Ende des Grundkörpers) offene Einfachhacken ausgebildet sind. Die Haken sind durch Ausstanzen unter Bildung eines Stanzloches und Formbiegen von Zungen aus dem in etwa L-, U- oder V-förmigen Profil gebildet. Es ist vorgesehen, dass jeder der Haken eine aus dem Schenkel des L-, U- oder V-Profils heraus ansteigende Flanke aufweist, wobei die Flanke in eine in etwa parallel zu den Schenkeln verlaufende Zunge übergeht und die Zunge zum offenen Ende hin ein verbreitertes Hakenteil aufweist, dem ein verjüngter Abschnitt des Stanzloches gegenüberliegt.

Nachfolgend wir die Erfindung anhand von Zeichnungen näher, jedoch nicht darauf beschränkt, erläutert. Es zeigen
- Fig. 1: einen Y-förmiger Pfahl für den Obstanbau in Seitenansicht,
- Fig. 2a: einen Schnitt durch den Grundkörper eines Y-förmigen Pfahls für den Obstanbau in Draufsicht,
- Fig. 2b: einen Grundkörper eines Y-förmigen Pfahls für den Obstanbau mit einer im Wesentlichen horizontalen Durchgangsöffnung sowie Haken zum Einhängen von Drähten im Wein- und Obstanbau in perspektivischer Ansicht,
- Fig. 2c: Haken zum Einhängen von Drähten im Wein- und Obstanbau in Seitenansicht,
- Fig. 3: eine lösbare Verbindung der Sicherungsstange mit dem Grundkörper in perspektivischer Ansicht,
- Fig. 4: einen Y-förmiger Pfahl für den Obstanbau in Seitenansicht, wobei der Grundkörpers über wenigstens ein Kopplungsmittel mit einer Netzhalterungskappe verbindbar ist,
- Fig. 5a: Kopplungsmittel für eine Netzhalterungskappe in Seitenansicht und
- Fig. 5b: Kopplungsmittel für eine Netzhalterungskappe in perspektivischer Ansicht.

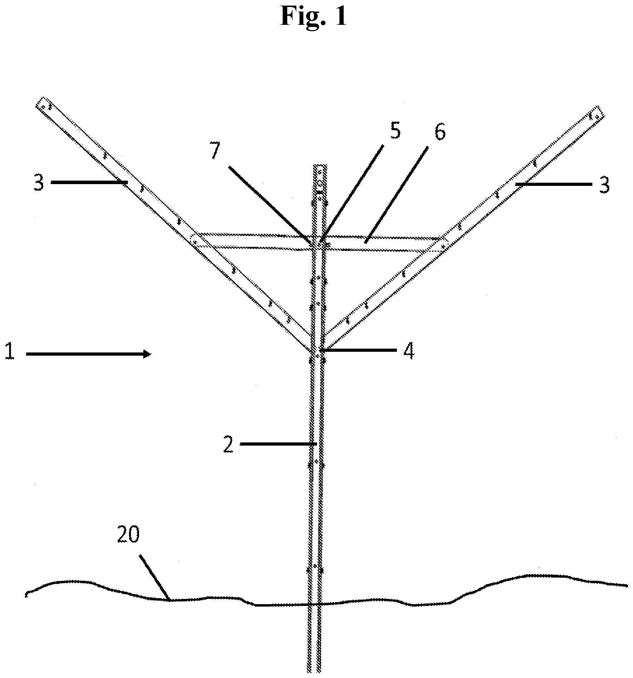

In Fig. 1 ist ein Y-förmiger Pfahl (1) für den Obstanbau in Seitenansicht dargestellt. Der Y-förmiger Pfahl (1) umfasst ein länglicher Grundkörper (2) und zwei Seitenarme (3). Der Grundkörper (2) weist Öffnungen (4) zum Einstecken jeweils mindestens eines Seitenarms (3) auf. Die eingesteckten Seitenarme (3) sind in einem Winkel α von ca. 40 bis 60°, vorzugsweise von ca. 50°, zum oberen Ende des Grundkörpers hin abgewinkelt. Zwischen den Öffnungen (4) und dem oberen Ende des Grundkörpers (2) ist wenigstens eine im Wesentlichen horizontale Durchgangsöffnung (5) vorgesehen, durch die eine Sicherungsstange (6) durchschiebbar und in ihr über wenigstens ein Verriegelungsmittel (7) festlegbar ist. Die Sicherungsstange (6) ist somit über wenigstens ein Verriegelungsmittel (7) horizontal gegen ein Verschieben in der Durchgangsöffnung (5) festgelegt bzw. gesichert. Weiterhin ist dargestellt, dass die Sicherungsstange (6) und der mindestens eine Seitenarm (3) miteinander lösbar verbunden sind. Vorzugsweise ist die Sicherungsstange (6) aus einem Blechprofil hergestellt. Das Blechprofil ist vorzugsweise als in etwa I-, L-, U- oder V-Profil ausgebildet. Es ist ebenfalls vorgesehen, dass die Sicherungsstange (6) aus einem Kunststoffprofil hergestellt ist. Das Kunststoffprofil ist ebenfalls vorzugsweise als in etwa I-, L-, U- oder V-Profil ausgebildet. Wie dargestellt, kann der Y-förmige Pfahl (1) mit seinem unteren Ende des Grundkörpers (2) in das Erdreich (20) eingebracht werden.

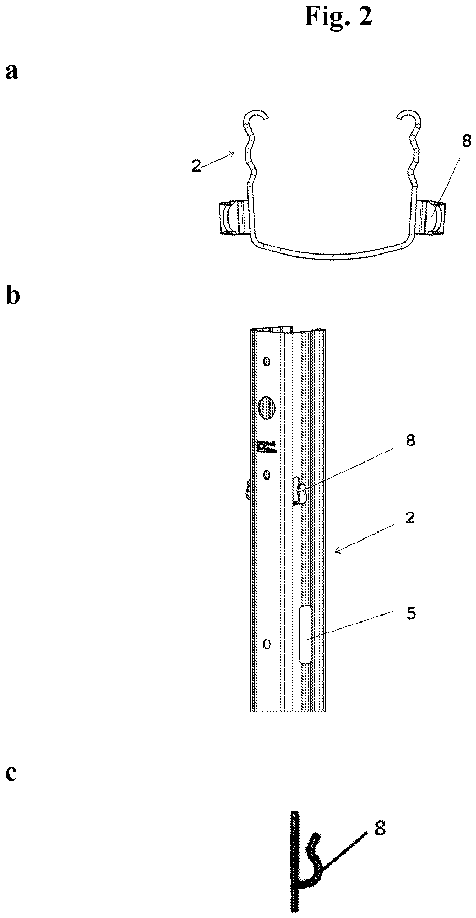

In Fig. 2a ist ein Schnitt durch den Grundkörper (2) eines Y-förmigen Pfahls für den Obstanbau in Draufsicht dargestellt. Wie gezeigt, weist der Grundkörper (2) einen in etwa U-förmigen Querschnitt (U-förmiges Profil) auf. An den Schenkeln des U sind Haken (8) angeordnet. Die Schenkel weisen jeweils an ihren Enden (im Profil) eine Einstülpung, gefolgt von einem Haken auf. Diese Ausgestaltung der Schenkel ist vorteilhaft für die Stabilität des Pfahls. Wie dargestellt, sind die Haken (8) in Rückennähe des U-förmigen Profils an den Schenkeln angeordnet. Durch diese Ausgestaltung wird die höchstmögliche Stabilität gegen seitlich einwirkende Kräfte erreicht. Die Einstülpung (im Profil) verstärkt zusätzlich die Statik.

In Fig. 2b ist ein Abschnitt eines Grundkörpers (2) eines Y-förmigen Pfahls für den Obstanbau mit einer im Wesentlichen horizontalen Durchgangsöffnung (5) sowie Haken (8) zum Einhängen von Drähten im Wein- und Obstanbau in perspektivischer Ansicht dargestellt.

In Fig. 2c ist ein Haken (8) zum Einhängen von Drähten im Wein- und Obstanbau in Seitenansicht dargestellt. Der Haken (8) ist als ein nach oben (zum oberen Ende des Grundkörpers) offener Einfachhaken ausgebildet. Es ist vorgesehen, dass im Bereich der Drahtrahmen für den Obstanbau ausschließlich zum oberen Ende des Grundkörpers offene Einfachhaken angeordnet sind. Die Haken (8) sind durch Ausstanzen unter Bildung eines Stanzloches (nicht dargestellt) und Formbiegen von Zungen aus dem in etwa U-Profil gebildet. Der Haken (8) weist eine aus dem Schenkel des U-Profils heraus ansteigende Flanke auf, wobei die Flanke in eine in etwa parallel zu den Schenkeln verlaufende Zunge übergeht und die Zunge zum offenen Ende hin ein verbreitertes Hakenteil aufweist, dem ein verjüngter Abschnitt des Stanzloches gegenüberliegt (nicht dargestellt).

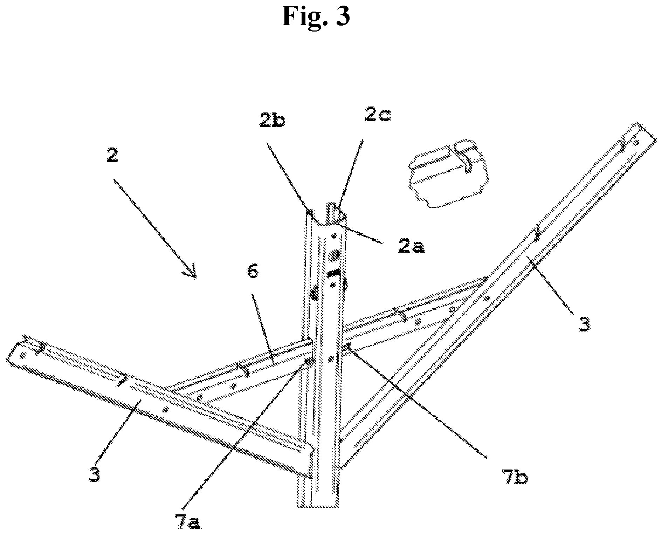

In Fig. 3 ist eine lösbare Verbindung der Sicherungsstange mit dem Grundkörper in perspektivischer Ansicht dargestellt. Die Verriegelungsmittel (7) weisen einen an der Sicherungsstange (6) vorgesehenen und in der Verriegelungsstellung am Grundkörper (2) anliegenden eigensteifen Anschlag (7a) sowie eine an der Sicherungsstange (3) geformte federelastische Blechzunge (7b) auf. Der Grundkörper (2) besteht aus einem U-förmigen Blechprofil, nämlich zwei Schenkeln (2b, 2c) und einem zwischen den Schenkeln rechtwinklig angeordneten Verbindungsstück (2a). Das U-förmige Blechprofil ist durch Stanzen und Formbiegen von Metallblech erhalten worden. Die Sicherungsstange (6) besteht ebenfalls aus einem Blechprofil, dass durch Stanzen und Formbiegen von Metallblech erhalten wurde. Die Sicherheitsstange (6) weist eine Vielzahl von Haken und/oder Ösen zum Halten der Drähte auf. Wie weiterhin dargestellt, ist die federelastische Blechzunge (7b) durch Ausstanzen und Formbiegen eines zungenförmigen Abschnitts aus dem Blechprofil der Sicherungsstange (6) gebildet.

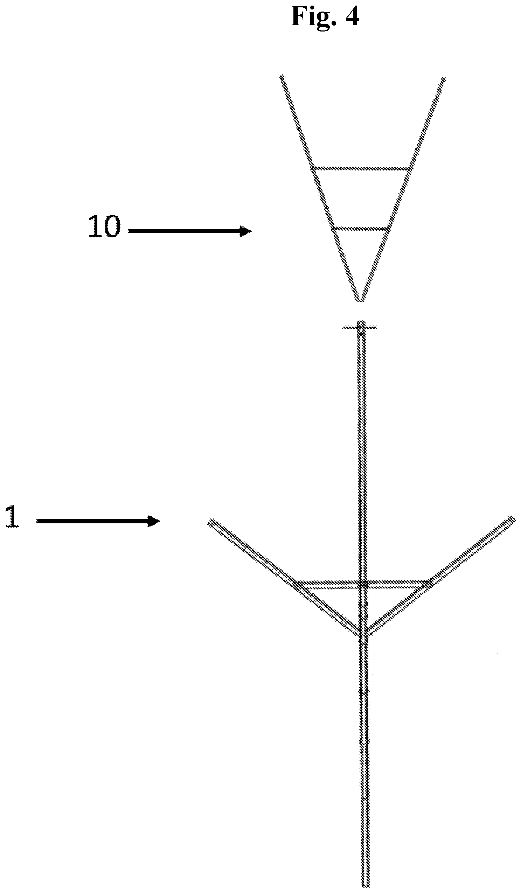

In Fig. 4 ist ein Y-förmiger Pfahl (1) für den Obstanbau in Seitenansicht dargestellt, wobei der Grundkörpers über wenigstens ein Kopplungsmittel mit einer Netzhalterungskappe (10) verbindbar ist.

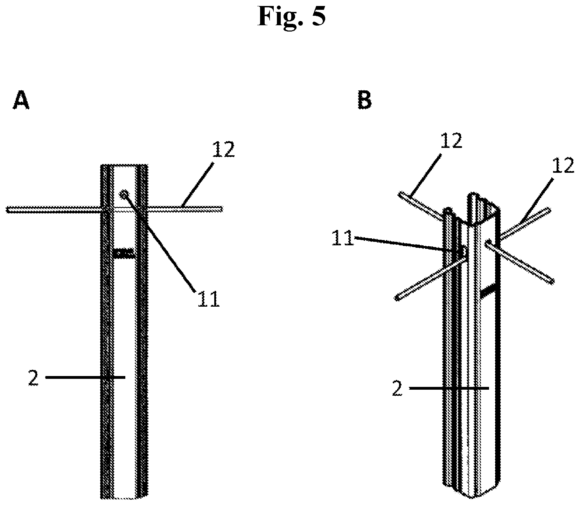

In den Figuren 5a und 5b sind die Kopplungsmittel (11, 12) für eine Netzhalterungskappe, die am oberen Ende des Grundkörpers (2) angeordnet sind, dargestellt. Die Kopplungsmittel können ebenfalls dazu dienen mehrere Pfähle in Längs- und/oder Querrichtung zu verbinden. Letztere Ausgestaltung erwirkt eine Stabilisierung der Pfähle (untereinander), wodurch eine seitliche Bewegung der Pfähle zueinander vermieden werden kann. Als Kopplungsmittel können Drahtseile, Kunststoffseile, Drähte oder Dergleichen verwendet werden.

## Patentansprüche

1. Y-förmiger Pfahl (1) für den Obstanbau, wobei ein länglicher Grundkörper (2) und zwei Seitenarme (3) vorgesehen sind, wobei der Grundkörper (2) Öffnungen (4) zum Einstecken jeweils mindestens eines Seitenarms (3) aufweist, wobei die eingesteckten Seitenarme (3) zum oberen Ende des Grundkörpers (2) hin abgewinkelt sind, wobei zwischen den Öffnungen (4) und dem oberen Ende des Grundkörpers (2) eine im Wesentlichen horizontale Durchgangsöffnung (5) vorgesehen ist, durch die eine Sicherungsstange (6) durchgeschoben ist, wobei die Sicherungsstange (6) über wenigstens ein Verriegelungsmittel (7) horizontal gegen ein Verschieben in der Durchgangsöffnung (5) festlegbar ist und die die Sicherungsstange (6) mit dem mindestens einen Seitenarm (3) lösbar verbindbar ist und wobei das wenigstens eine Verriegelungsmittel (7) einen an der Sicherungsstange (6) vorgesehenen und in der Verriegelungsstellung am Grundkörper (2) anliegenden eigensteifen Anschlag (7a) sowie eine an der Sicherungsstange (6) geformte federelastische Blechzunge (7b) umfasst.

2. Y-förmiger Pfahl (1) für den Obstanbau gemäß Anspruch 1, **dadurch gekennzeichnet, dass** die Sicherungsstange (6) aus einem Blechprofil besteht.

3. Y-förmiger Pfahl (1) für den Obstanbau gemäß Anspruch 2, **dadurch gekennzeichnet, dass** die federelastische Blechzunge (7b) durch Ausstanzen und Formbiegen eines zungenförmigen Abschnitts aus dem Blechprofil der Sicherungsstange (6) gebildet ist.

4. Y-förmiger Pfahl (1) für den Obstanbau gemäß Anspruch 3, **dadurch gekennzeichnet, dass** die federelastische Blechzunge (7b) einen aus dem Blechprofil der Sicherungsstange (6) in einem Winkel von ca. 70 bis 90°, vorzugsweise von ca. 80°, herausspringenden Federabschnitt und einen im Wesentlichen parallel zur Außenseite der Sicherungsstange verlaufenden Stützabschnitt umfasst, an dessen freiem Ende eine Stützfläche geformt ist, über die die Sicherungsstange in der Verriegelungsposition am Grundkörper (2) abstützbar ist.

5. Y-förmiger Pfahl (1) für den Obstanbau gemäß Anspruch 1, **dadurch gekennzeichnet, dass** die Verriegelungsmittel (7) eine Bohrung in der Sicherungsstange (6) sowie eine Bohrung in dem Grundkörper (2) umfassen, wobei Befestigungsmittel durch die Bohrung in dem Grundkörper (2) und durch die Bohrung in der Sicherungsstange (6) schiebbar und sicherbar sind.

6. Y-förmiger Pfahl (1) für den Obstanbau gemäß Anspruch 1, **dadurch gekennzeichnet, dass** im Bereich der Öffnungen (4) und/oder der Seitenarme (3) Sicherungsmittel zum Sichern der in die Öffnungen (4) eingesteckten Seitenarme (3) vorgesehen sind.

7. Y-förmiger Pfahl (1) für den Obstanbau gemäß Anspruch 1, **dadurch gekennzeichnet, dass** zur lösbaren Verbindung der Sicherungsstange (6) mit den Seitenarmen (3) jeweils eine Schraubverbindung zwischen der Sicherungsstange (6) und einem der Seitenarme (3) vorgesehen ist.

8. Y-förmiger Pfahl (1) für den Obstanbau gemäß Anspruch 1, **dadurch gekennzeichnet, dass** die eingesteckten Seitenarme (3) in einem Winkel α von ca. 40 bis 60°, vorzugsweise von ca. 50°, zum oberen Ende des Grundkörpers hin abgewinkelt sind.

9. Y-förmiger Pfahl (1) für den Obstanbau gemäß Anspruch 1, **dadurch gekennzeichnet, dass** an dem oberen Ende des Grundkörpers (2) wenigstens ein Kopplungsmittel (11, 12) für eine Netzhalterungskappe (10) anordbar ist.

10. Y-förmiger Pfahl (1) für den Obstanbau gemäß Anspruch 1, **dadurch gekennzeichnet, dass** der Grundkörper (2) ein in etwa ein L-, U- oder V-förmiges Profil aufweist, an dem im Bereich für die Aufnahme von Drahtrahmen außenliegende Haken (8) angeordnet sind, wobei die Haken (8) im Bereich der Drahtrahmen für den Obstanbau als Einfachhaken ausgebildet sind, wobei die Haken (8) durch Ausstanzen unter Bildung eines Stanzloches und Formbiegen von Zungen aus dem L-, U- oder V-Profil gebildet sind und jeder der Haken (8) eine aus dem Schenkel des in etwa L-, U- oder V-förmigen Profils heraus ansteigende Flanke aufweist, wobei die Flanke in eine in etwa parallel zu den Schenkeln verlaufende Zunge übergeht und die Zunge zum offenen Ende hin ein verbreitertes Hakenteil aufweist, dem ein verjüngter Abschnitt des Stanzloches gegenüberliegt.

## Claims

1. Y-shaped stake (1) for fruit-growing, wherein a longitudinal base body (2) and two side arms (3) are provided, wherein the base body (2) comprises openings (4) for the inserting of at least one side arm (3) each, wherein the inserted side arms (3) are angled toward the upper end of the base body (2), wherein, between the openings (4) and the upper end of the base body (2), a substantially horizontal through-opening (5) is provided, through which a securing rod (6) can be pushed through, wherein the securing rod (6) is horizontally securable against a displacement in the through-opening (5) via at least one locking means (7), and the securing rod (6) is detachably connectable with the at least one side arm (3), and wherein the at least one the locking means (7) includes an inherently rigid stopper (7a) butting against the base body (2) in the locking position and provided for on the securing rod (6), as well as a spring-elastic sheet-metal tongue (7b) molded on the securing rod (3).

2. Y-shaped stake (1) for fruit-growing according to one claim 1, **characterized in that** the securing rod (6) consists of a sheet-metal profile.

3. Y-shaped stake (1) for fruit-growing according to claim 2, **characterized in that** the spring-elastic sheet-metal tongue (7b) is formed through punching out and deformation of a tongue-shaped section out of the sheet-metal profile of the securing rod (6).

4. Y-shaped stake (1) for fruit-growing according to claim 3, **characterized in that** the spring-elastic sheet-metal tongue (7b) includes a spring portion protruding out of the sheet-metal profile of the securing rod (6) at an angle of approx. 70 to 90°, preferably at approx. 80°, and a support portion running substantially parallel to the outer side of the securing rod, on the free end of which a support surface is formed, via which the securing rod, in the locking position, can be supported on the base body (2).

5. Y-shaped stake (1) for fruit-growing according to claim 1, **characterized in that** the locking means (2) include a bore-hole in the securing rod (6), as well as a bore-hole in the base body (2), wherein the fastening means are pushable and securable through the bore-hole in the base body (2) and through the bore-hole in the securing rod (6).

6. Y-shaped stake (1) for fruit-growing according to claim 1, **characterized in that**, in the area of the openings (4) and/or of the side arms (3), securing means for securing the side arms (3) inserted into the openings (4) are provided.

7. Y-shaped stake (1) for fruit-growing according to claim 1, **characterized in that**, for the detachable connecting of the securing rod (6) with the side arms (3), a screw connection is respectively provided between the securing rod (6) and one of the side arms (3).

8. Y-shaped stake (1) for fruit-growing according to claim 1, **characterized in that** the inserted side arms (3) are angled towards the upper end of the base body at an angle *a* of approx. 40 to 60°, preferably of approx. 50°.

9. Y-shaped stake (1) for fruit-growing according to claim 1, **characterized in that**, on the upper end of the base body (2), at least one coupling means (11, 12) is arrangable for a net support cover (10).

10. Y-shaped stake (1) for fruit-growing according to claim 1, **characterized in that** the base body (2) comprises an approximately L-, U- or V-shaped profile, on which, in the area for the receiving of wire frames, outside-lying hooks (8) are arranged, wherein the hooks (8) in the area of the wire frames for fruit-growing, are formed as simple hooks, wherein the hooks (8) are formed by punching out, to form a punched hole, and deforming of tongues out of the L-, U- or V-profile, and each of the hooks (8) comprises a flank protruding out of the limb of the approximately L-, U- or V-shaped profile, wherein the flank merges into a tongue running roughly parallel to the limbs, and the tongue comprises a hook member widening towards the open end, which lies opposite a tapered section of the punched hole.

## Revendications

1. Piquet en forme de Y (1) pour la culture fruitière, dans lequel sont prévus un corps de base allongé (2) et deux bras latéraux (3), le corps de base (2) présentant des ouvertures (4) pour l'insertion dans chacune d'au moins un bras latéral (3), les bras latéraux (3) insérés étant inclinés vers l'extrémité supérieure du corps de base (2), une ouverture traversante (5) sensiblement horizontale étant prévue entre les ouvertures (4) et l'extrémité supérieure du corps de base (2), à travers laquelle est enfilée une tige de fixation (6), laquelle tige de fixation (6) peut être bloquée contre un déplacement horizontalement dans l'ouverture traversante (5) par l'intermédiaire d'au moins un moyen de verrouillage (7), et la tige de fixation (6) pouvant être reliée de manière réversible à l'au moins un bras latéral (3), et le au moins un moyen de verrouillage (7) comprenant une butée (7a) rigide en soi prévue sur la tige de fixation (6) et en appui contre le corps de base (2) en position de verrouillage ainsi qu'une languette élastique en tôle (7b) formée sur la tige de fixation (6).

2. Piquet en forme de Y (1) pour la culture fruitière selon la revendication 1, **caractérisé en ce que** la tige de fixation (6) est constituée d'un profilé en tôle.

3. Piquet en forme de Y (1) pour la culture fruitière selon la revendication 2, **caractérisé en ce que** la languette élastique en tôle (7b) est formée depuis le profilé en tôle de la barre de fixation (6) par découpage à la matrice et pliage d'une section en forme de languette.

4. Piquet en forme de Y (1) pour la culture fruitière selon la revendication 3, **caractérisé en ce que** la languette élastique en tôle (7b) comprend une section élastique qui saille du profilé en tôle de la tige de fixation (6) selon un angle d'environ 70° à 90°, de préférence environ 80°, et une section support s'étendant de façon sensiblement parallèle à la face extérieure de la tige de fixation et sur l'extrémité libre de laquelle est formée une surface support au moyen de laquelle la tige de fixation peut être supportée en position verrouillée sur le corps de base (2).

5. Piquet en forme de Y (1) pour la culture fruitière selon la revendication 1, **caractérisé en ce que** les moyens de verrouillage (7) comprennent un alésage dans la tige de fixation (6) et un alésage dans le corps de base (2), des moyens de fixation pouvant être insérés à travers l'alésage dans le corps de base (2) et l'alésage dans la tige de fixation (6) et être fixés.

6. Piquet en forme de Y (1) pour la culture fruitière selon la revendication 1, **caractérisé en ce que** des moyens de verrouillage sont prévus dans la zone des ouvertures (4) et/ou des bras latéraux (3) pour verrouiller les bras latéraux (3) insérés dans les ouvertures (4).

7. Piquet en forme de Y (1) pour la culture fruitière selon la revendication 1, **caractérisé en ce qu'**il est prévu un raccord vissé entre la tige de fixation (6) et l'un des bras latéraux (3) pour la liaison réversible de la tige de fixation (6) aux bras latéraux (3).

8. Piquet en forme de Y (1) pour la culture fruitière selon la revendication 1, **caractérisé en ce que** les bras latéraux (3) insérés sont inclinés vers l'extrémité supérieure du corps de base selon un angle α d'environ 40° à 60°, de préférence d'environ 50°.

9. Piquet en forme de Y (1) pour la culture fruitière selon la revendication 1, **caractérisé en ce qu'**à l'extrémité supérieure du corps de base (2), au moins un moyen d'accouplement (11, 12) peut être disposé pour un chapeau de retenue de filet (10).

10. Piquet en forme de Y (1) pour la culture fruitière selon la revendication 1, **caractérisé en ce que** le corps de base (2) présente un profil approximativement en forme de L, de U ou de V, sur l'extérieur duquel sont disposés des crochets (8) situés dans la zone pour recevoir des cadres en fil de fer, les crochets (8) étant réalisés sous la forme de crochets simples dans la zone des cadres en fil de fer pour la culture fruitière, les crochets (8) étant formés par découpage à la matrice en formant un trou poinçonné et par pliage de langues à partir du profil en L, en U ou en V, et chacun des crochets (8) comporte un flanc s'élevant de la branche du profilé approximativement en L, en U ou en V, le flanc se poursuivant en une languette s'étendant de façon approximativement parallèle aux branches, la languette présentant une partie de crochet élargie vers l'extrémité ouverte faisant face à une partie rétrécie du trou poinçonné.
